(19) Europäisches Patentamt
European Patent Office
Office européen des brevets

(11) **EP 3 862 838 B1**

(12) **EUROPEAN PATENT SPECIFICATION**

(45) Date of publication and mention
of the grant of the patent:
**17.08.2022  Bulletin 2022/33**

(21) Application number: **19869130.5**

(22) Date of filing: **26.09.2019**

(51) International Patent Classification (IPC):
***G05D 1/02*** *(2020.01)*        ***B25J 5/00*** *(2006.01)*
***B25J 13/00*** *(2006.01)*

(52) Cooperative Patent Classification (CPC):
**G05D 1/0217; B25J 5/007; B25J 13/003**

(86) International application number:
**PCT/JP2019/037853**

(87) International publication number:
**WO 2020/071235 (09.04.2020 Gazette 2020/15)**

(54) **CONTROL DEVICE FOR MOBILE UNIT, CONTROL METHOD FOR MOBILE UNIT, AND PROGRAM**

STEUERUNGSVORRICHTUNG FÜR MOBILE EINHEIT, STEUERUNGSVERFAHREN FÜR MOBILE EINHEIT UND PROGRAMM

DISPOSITIF DE COMMANDE UNITÉ MOBILE, PROCÉDÉ DE COMMANDE D'UNITÉ MOBILE, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.10.2018   JP 2018188222**

(43) Date of publication of application:
**11.08.2021   Bulletin 2021/32**

(73) Proprietor: **Sony Group Corporation
Tokyo 108-0075 (JP)**

(72) Inventors:
• **HONGO, Kazuo
Tokyo 108-0075 (JP)**
• **TSUZAKI, Ryoichi
Tokyo 108-0075 (JP)**
• **CONUS, William Alexandre
Tokyo 108-0075 (JP)**

(74) Representative: **D Young & Co LLP
120 Holborn
London EC1N 2DY (GB)**

(56) References cited:
**EP-A2- 1 736 330        WO-A1-01/95314
CN-U- 205 121 334       JP-A- 2018 017 997
JP-A- 2018 111 154      US-A1- 2018 033 421**

**Description**

Field

The present disclosure relates to a mobile unit control device, a mobile unit control method and a program. Background

In the related art, for example, Patent Literature 1 below describes that the control device of a mobile robot that can perform voice recognition without being disturbed by the operating sound that it generates controls the operation of a movable unit to reduce the operating sound when talking to a human.

Citation List

Patent Literature

Patent Literature 1: JP 2006-95635 A. Other background references include CN 205121334 U which discloses an intelligent cleaning device, EP 1736330 A2  which discloses a robot cleaner and US 2018/033421 A1 which discloses a speaker generating a sound wave canceling a driving sound generated from a driving mechanism.

Summary

Technical Problem

According to the technique described in the above Patent Literature, the sound volume to the vicinity can be reduced simply by slowing down the operating speed. However, it is rare that it is required to reduce the noise in all directions and in all spaces, and in many cases, there is a subject or a target spaces to which it is not desired to give a noise.

Therefore, considering the transfer function in which the noise reaches the target, the mobile unit such as a robot is required to achieve that the noise is not given to the target, and the task to be done is completed. The above Patent Literature does not consider these issues at all.

Further, the noise may be generated not only by the mobile unit itself, but also by many noise sources around the mobile unit. Optimizing the operation of the robot with these in mind is not considered in Patent Literature 1 above.

Therefore, it is required not to give a noise to a subject to which it is not desired to give the noise. Solution to Problem

The invention is defined by the claims. Advantageous Effects of Invention

As described above, according to the present disclosure, it is possible not to give a noise to a subject to which it is not desired to give the noise.

Note that the above-described effect is not necessarily restrictive, and any one of effects described in the present specification or any another effect obtainable from the present specification may be exhibited in addition to or in place of the above-described effect. Brief Description of Drawings

FIG. 1 is a schematic diagram illustrating a schematic configuration of hardware of a robot to which the system according to an embodiment of the present disclosure is applied.
FIG. 2 is a schematic diagram illustrating a configuration of a control device and its surroundings.
FIG. 3 is a schematic diagram illustrating an amount of attenuation A during sound transmission from a point P1 away from a point sound source by r0 [m] to a point P2 [m] away from it by r [m].
FIG. 4 is a schematic diagram illustrating an example of an operation performed by the robot.
FIG. 5A is a schematic diagram for explaining a method of suppressing a maximum value of the noise when the robot moves both arms.
FIG. 5B is a schematic diagram for explaining the method of suppressing the maximum value of the noise when the robot moves both arms.
FIG. 6A is a schematic diagram for explaining a method of suppressing the maximum value of the noise when the robot is located near a baby from the beginning in FIG. 4.
FIG. 6B is a schematic diagram for explaining the method of suppressing the maximum value of the noise when the robot is located near the baby from the beginning in FIG. 4.
FIG. 7 is a schematic diagram illustrating a case where there is a noise source outdoors outside the window and there is a door between the indoor robot and the baby.
FIG. 8 is a schematic diagram illustrating an example in which a cover is attached to the robot in order to suppress the degree of transmission of the noise generated from the robot itself.
FIG. 9 is a schematic diagram illustrating cooperation between a plurality of devices.

FIG. 10 is a schematic diagram which illustrates the example of canceling a noise in a case where it is not possible to communicate, or in a case where task priority is set high, and it is difficult to reduce the noise when a plurality of devices exists as in FIG. 9.

FIG. 11 is a schematic diagram illustrating an example of a walking robot.

Description of Embodiments

Hereinafter, preferred embodiments of the present disclosure will be described in detail with reference to the accompanying drawings. Note that, in the present specification and drawings, redundant description of a configuration element having substantially the same functional configuration is omitted by providing the same sign.

The description will be given in the following order.

1. Robot configuration example
2. Control device configuration example and operation example
3. Example of robot operation
4. Specific example of suppressing noise in the target region

4.1. Example of suppressing the influence of ambient noise
4.2. When the ambient noise is large
4.3. Mute by cover
4.4. Cooperation between a plurality of devices
4.5. Example of walking robot
4.6. Route selection according to road surface condition
4.7. Whitening noise
4.8. Mute by drive system

5. Modification

1. Robot configuration example

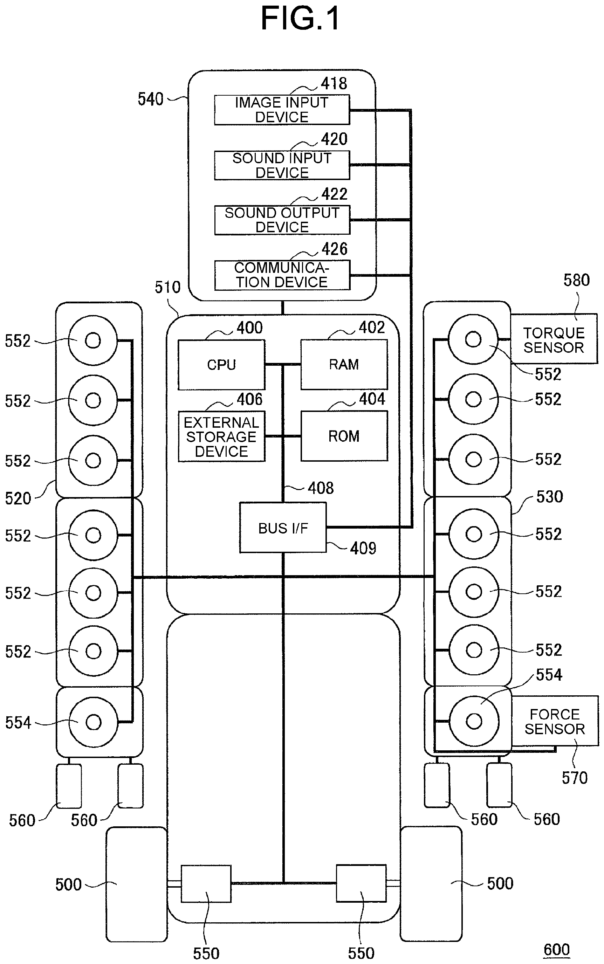

First, with reference to FIG. 1, a schematic configuration of hardware of a robot (mobile unit) 600 to which the system according to the embodiment of the present disclosure is applied will be described. Although the robot 600 that can move on the ground as a mobile unit is illustrated as an example in FIG. 1, the present disclosure is applicable to various mobile units such as drones, robot vacuum cleaners, and communication robots. As illustrated in FIG. 1, the robot 600 includes wheels 500 for movement, a body portion 510, arms 520 and 530, and a head portion 540.

The wheel 500 is driven by an actuator 550. When the wheel 500 is driven, the robot 600 moves. The arms 520 and 530 have a plurality of joints, and each joint is provided with an actuator 552. The arms 520 and 530 are bent by the drive of the actuator 552. Each joint of the arms 520 and 530 is provided with an encoder that detects the angle of the joint. Similarly, an encoder that detects the rotation angle of the wheel 500 is provided in the vicinity of the wheel 500.

A hand 560 is provided at the distal end of each of the arms 520 and 530. The hand 560 is driven by the drive of an actuator 554 to grip an object and exert a force such as pressing the object.

A force sensor 570 is provided at the distal end of the hand 560 and detects the gripping force when the hand 560 grips the object and the pressure when the hand 560 pushes the object. A torque sensor 580 is provided in each joint and detects the torque of each joint. The force sensor 570 may be provided on each of the hands 560 of both hands.

The body portion 510 includes a control device 400, a RAM 402, a ROM 404, an external storage device 406, a bus 408, and a bus interface (bus I/F) 409. The external storage device 406 is a storage device connected from the outside of the robot 600. The control device 400, the RAM 402, the ROM 404, the external storage device 406, and the bus I/F 409 are connected via the bus 408.

The head portion 540 includes an image input device 418, a sound input device 420, a sound output device 422, and a communication device 426. These devices are also connected to the control device 400 and the like of the body portion 510 via the bus I/F 409. As an example, the image input device 418 may be composed of a camera, and the sound input device 420 may be composed of an auditory sensor, a microphone, or the like. Further, the sound output device 422 is composed of a speaker. The communication device 426 wirelessly communicates with other devices. The radio communication method is not particularly limited. The image input device 418, the sound input device 420, the sound output device 422, and the communication device 426 may be provided in a unit other than the head portion.

2. Control device configuration example and operation example

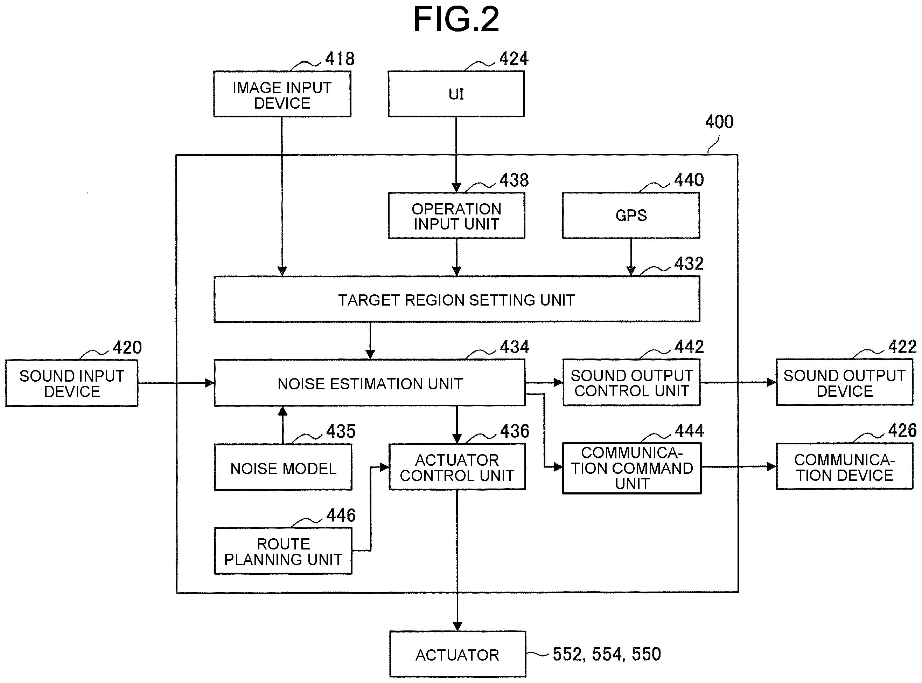

FIG. 2 is a schematic diagram illustrating the configuration of the control device 400 and its surroundings. As illustrated in FIG. 2, the control device 400 includes a target region setting unit 432 that sets the target region, a noise estimation unit 434 that estimates the noise in the target region, a noise model 435, an actuator control unit 436 that controls the actuator based on the noise estimated by the noise estimation unit 434, an operation input unit 438 that receives the operation information by the user from a user interface (UI) 424, a position information acquisition unit (GPS) 440 that acquires the position information, a sound output control unit 442 that controls a sound output from the sound output device 422, a communication command unit 444, and a route planning unit 446. Each component of the control device 400 illustrated in FIG. 2 can be composed of a central arithmetic processing unit such as a CPU and a program (software) or a circuit (hardware) for operating the central arithmetic processing unit.

The target region setting unit 432 sets a target region in which the noise is reduced. The target region setting unit 432 sets the target region based on the operation information input to the operation input unit 438, the image information input from the image input device 418, the position information acquired by a position information acquisition unit 440, and the like.

The noise estimation unit 434 estimates the noise in the target region set by the target region setting unit 432 based on the noise model 435. The noise estimation unit 434 estimates the sound volume (dB), frequency, etc. of the noise in the target region. The noise model 435 is a model of the noise generated when each actuator included in the robot 600 is driven. The actuator control unit 436 controls the actuator based on the noise estimated by the noise estimation unit 434. The actuator control unit 436 performs control so that the noise of the actuator is equal to or lower than the allowable upper limit value in the target region. Here, the upper limit value may be different depending on the day of the week (Sunday, public holiday, weekday), or may be different depending on the time zone, place, and the like. The upper limit value may be stored in advance in the ROM 404 or the external storage device 406, or may be set by the user from the user interface (UI) 424.

Using the sound input device 420, it is possible to measure how large noise is generated when each part of the robot 600 is driven. For example, when the robot 600 is a life-sized humanoid, the shoulders are about 200 mm away from the sound input device 420. The elbow is about 400 mm away from the sound input device 420. These distances depend on the structure of the robot 600, and it is possible to grasp as a model how far it is according to the current posture of the robot 600 itself.

Further, by operating each actuator of the robot 600 and measuring the noise amount with the sound input device 420, it is possible to collect data as the noise amount for each part. A calibration operation may be performed to acquire the noise amount, or the noise amount may be acquired in real time according to a situation that changes from moment to moment during the operation. A noise model 450 is constructed by the distance between the actuator and the sound input device 420 and the noise amount data obtained in this way. These data may be stored in a data table of the ROM 404 or the like and used for calculation, or may be used for estimating noise generation by using machine learning by providing a machine learning unit.

A neural network can be used for machine learning, and deep learning is also an effective method. As a specific example of input/output, it is possible to use as an input value any one or more of "an on/off status for each actuator, a current position for each actuator, distance information from the sound input device 420 for each actuator, a current position and posture of the robot, a position of the target region, a current speed for each actuator, a current acceleration for each actuator, and load information such as luggage possessed by the robot", and it is possible to use as an output value any one or more of "noise information reaching the robot sound input device 420, noise information reaching the target region, and noise information extracted by processing these (frequency conversion, etc.)".

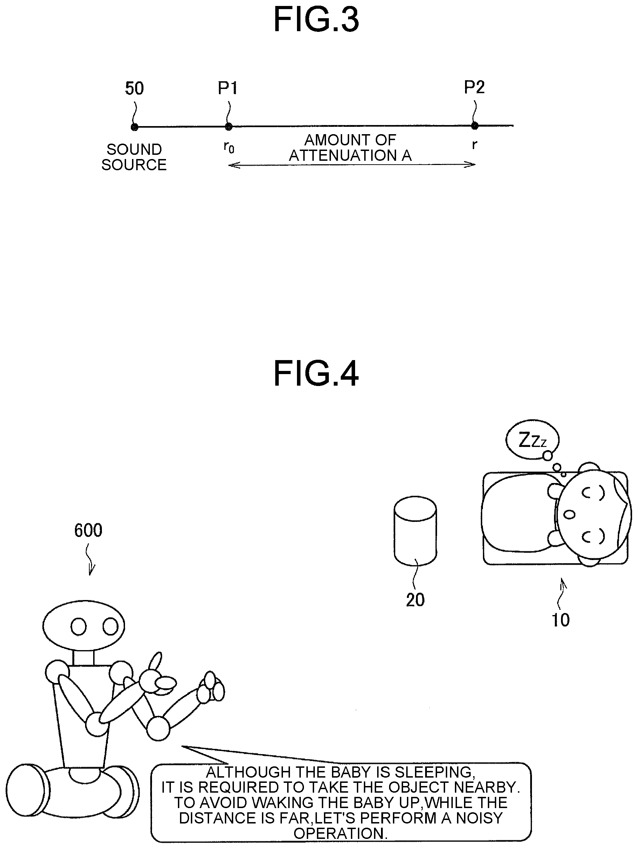

The noise amount is attenuated while traveling far away. In the case of a point sound source 50 as illustrated in FIG. 3, the amount of attenuation A [dB] during the sound transmission from the point P1 which is $r_0$ [m] away from point sound source 50 to the point P2 [m] which is r [m] away from the point sound source 50 can be expressed by the following Equation (1).

$$\text{Amount of attenuation A [dB]} = 20 \times \text{Log}_{10}\ (r/r_0) \ \dots \ (1)$$

According to Equation (1), for example, in a case of driving an elbow joint motor (point sound source 50) at a distance of $r_0$ = 0.4 [m] from the sound input device 420 (point P1), when the noise detected by the sound input device 420 is 50 [dB], the noise acting on the target region (point P2) r = 5 [m] ahead is attenuated by about 21 [dB] to become 29 [dB]. Based on the above principle, the noise estimation unit 434 can estimate the noise in the target region using the noise model 450.

Even when the noise does not originate from the inside of the robot 600, the distance to the source can be obtained by the same method. For example, when the object (tool) gripped by the robot 600 is the noise source, by imaging the state of gripping an object with the image input device 418 or the like in addition to the current model of the robot 600 itself, it is possible to approximately specify the size of the object and the position where the sound is generated to obtain the estimate of the distance.

Also, when the sound is generated at a remote location that is not directly related to the robot 600, for example, the distance to the sound source can be measured by capturing the sound source with the image input device 418. When the sound source is out of sight, since the amount of attenuation can be obtained by comparing the noise level heard at the current position (point P1) with the noise level at the location (point P2) to which the robot 600 voluntarily moves by a known distance from there using the principle of FIG. 3, the position of the noise source can be obtained using Equation (1). In this case, the noise may be detected by focusing on a specific frequency band by Fourier transform so as not to be disturbed by the noise from other sources.

3. Example of robot operation

FIG. 4 is a schematic diagram illustrating an example of the operation performed by the robot 600. As illustrated in FIG. 4, it is assumed that there is an article 20 that the robot 600 wants to carry next to a baby 10 sleeping. Here, in the present embodiment, the target region represents a region which is a target for suppressing the noise when the robot 600 operates. In the example illustrated in FIG. 4, the target region is the region near the baby 10. In the case of the example illustrated in FIG. 4, the target region setting unit 432 of the robot 600 sets the region near the baby 10 as the target region. As will be described later, a living creature such as a person or an animal (especially a sleeping person, a sleeping animal, a person reading a book or watching videos, a person who is calling), a room, a specific space, a home appliance such as a telephone or a smart speaker, or specific coordinates (a position) may be set as a target region.

For example, after the robot 600 moves to a target region near the baby 10, when moving the arms 520 and 530 to grip the article 20, the baby 10 may be awakened by the operation sound of arms 520 and 530.

Therefore, the noise estimation unit 434 of the robot 600 estimates the noise at the position of the baby 10 when the arms 520 and 530 are moved. The actuator control unit 436 controls the operation of the robot 600 based on the noise estimated by the noise estimation unit 434.

The robot 600 uses the sound input device 420 attached to the head portion 540 to associate the operation sound of the hand and each part with its own operation. Furthermore, since the approximate distance to the noise source can be estimated by the operation part, how large the sound obtained by the sound input device 420 actually is, and how large the noise is at a position depending on a distance are derived.

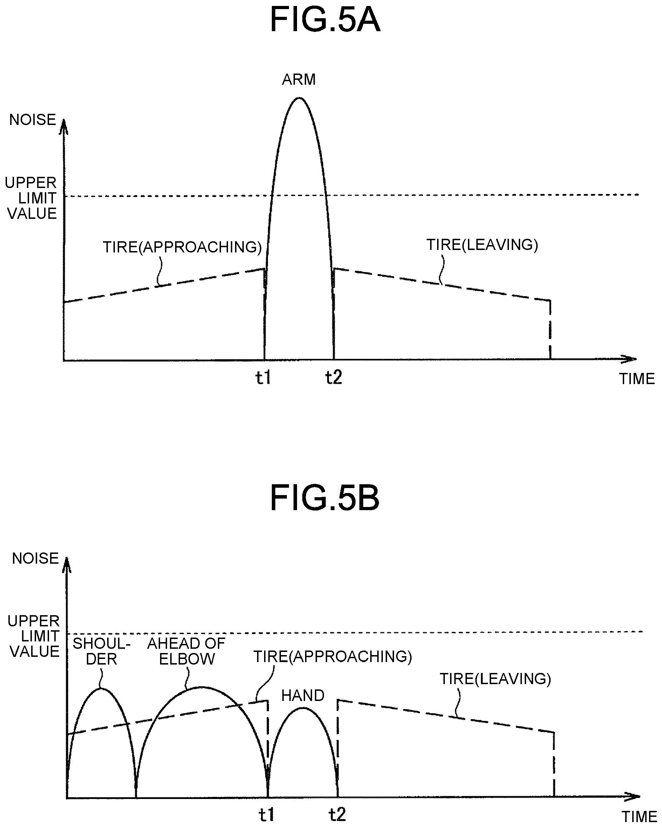

FIGS. 5A and 5B are schematic diagrams for explaining a method of suppressing the maximum value of the noise when the robot 600 performs an operation of moving both arms. In FIGS. 5A and 5B, the vertical axis represents the sound volume of the noise in the target region, and the horizontal axis represents time. The solid line represents the noise of the arms (arms 520 and 530) of the robot 600, and the broken line represents the noise of the tire (wheel 500) of the robot 600. It is assumed that the robot 600 approaches the target region by time t1, the arm of the robot 600 grips the article 20 between time t1 and time t2, and the robot 600 moves away from the target region after time t2.

The vertical axis of FIGS. 5A and 5B illustrates the upper limit value of the noise in the target region near the baby 10. The upper limit value is set in advance as a sound volume at which the baby 10 will wake up when the noise in the target region near the baby 10 exceeds that value. In this case, for example, the upper limit value can be set to 50 to 60 dB. It should be noted that the tire noise alone does not exceed the upper limit value.

As illustrated in FIG. 5A, in a case where the robot 600 performs an operation when moving the arm all at once in the target region after approaching the target region, the noise level is increased and the noise exceeds the upper limit. On the other hand, as illustrated in FIG. 5B, the maximum value of the noise can be suppressed by sequentially moving each part of the arm ("shoulder", "ahead of elbow", etc.).

Also, as illustrated in FIG. 5B, by driving each part of the arm while the robot 600 is moving before the robot 600 reaches the target region, it is possible to generate a noise when the robot 600 is located far from the target region. In this case, since the noise is attenuated while the sound is transmitted from the point far from the target region to the target region, the noise at the position of the baby can be set to the upper limit value or less.

Therefore, the calculation is equivalent to solving a constrained optimization problem, the upper limit value of the noise is set as a constraint, and the calculation of minimizing the robot operating time within the constraint will be solved. A known Lagrange multiplier method can be used as a method of solving the calculation.

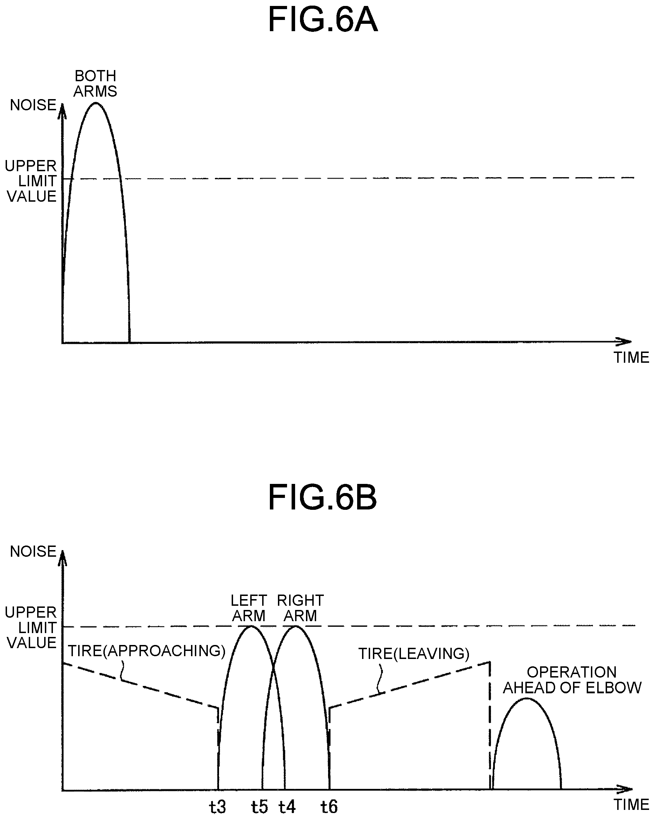

FIGS. 6A and 6B are schematic diagrams for explaining a method of suppressing the maximum value of the noise when the robot 600 is located near the baby 10 from the beginning. Similar to FIGS. 5A and 5B, in FIGS. 6A and 6B, the vertical axis represents the sound volume of the noise in the target region, and the horizontal axis represents time.

When the robot 600 is located near the target region, the noise is transmitted to the baby 10 with little attenuation. Therefore, when the robot 600 generates a large sound near the target region, the sound is heard as it is by the baby 10 in the target region. On the other hand, since the noise for movement such as rotation of wheel 100, etc. is small, the maximum value of the noise acting on the target region can be suppressed by performing a noisy operation after the robot 600 leaves the target region once.

As illustrated in FIG. 6A, when the robot 600 is located near the target region and the arm is moved, the noise in the target region exceeds the upper limit value. For this reason, as illustrated in FIG. 6B, the robot 600 once moves to a position away from the target region by driving the tires, and after driving each part of the arm to set a posture to grip the article 20, approaches the target region again.

Specifically, when the robot 600 reaches a position away from the target region at time t3, the left arm is moved between times t3 and t4, and the right arm is moved between times t5 and t6. As a result, the noise when the arm is moved can be suppressed to the upper limit value or less. Then, the tire is driven after time t6, and after the robot 600 approaches the target region again, the robot 600 moves a part ahead of the elbow to grip the article 20. Even when the operation ahead of the elbow is performed near the target region, the noise can be suppressed to the upper limit value or less. In this way, after the robot 600 approaches the target region again, it is only necessary to perform the operation of gripping the article 20, so that the noise generated in the target region can be suppressed to the upper limit value or less.

In the case of the example illustrated in FIG. 6B, since the robot 600 will achieve the intended movement after approaching the target region again, a plan is made so that the purpose can be achieved by driving only the part where the noise is generated as little as possible when approaching the target region again. Then, the arm is driven to a posture according to the plan outside the target region so that the noise due to the change in posture does not exceed the upper limit value.

In the above-mentioned example, regarding the noise of each part such as the arm of the robot 600 itself, an example in which the noise in the target region is set to the upper limit value or less is described. On the other hand, using the sound input device 420 attached to the robot 600, not only the noise of the hand and each part, but also the noise of an object such as a tool operated by the robot 600 may be acquired, and linked to its own movement.

At this time, the robot 600 is gripping the tool, and the sound generated when the tool is used is acquired by the robot 600 by a method such as learning. Once learned, the content can be reused. For example, it is possible to exert a quieter effect on an object such as a musical instrument that positively generates the sound according to an operation. Examples of musical instruments include maracas and tambourines.

When a tool or the like is a noise source, the position of the noise source is first identified, unlike the case where the actuator of the robot 600 itself is the noise source. For example, by using a 3D camera or the like as the image input device 418, it is possible to recognize the noise source and estimate the distance from the noise source. Furthermore, since the noise level can be obtained with respect to the speed and acceleration when the tool is moving, it is possible to calculate how large the sound obtained by the sound input device 420 is generated by what kind of operation, and how large the noise is at a position depending on a distance.

4. Specific example of suppressing noise in the target region

4.1. Example of suppressing the influence of ambient noise

In the above-mentioned example, the case where the actuator of the robot 600 itself or the tool gripped by the robot 600 is a noise source is described. On the other hand, the noise source is not limited to these, and may be a source completely different from the robot 600. Even in this case, the ambient noise is measured using the sound input device 420 attached to the robot 600, and the distance to the noise source can be derived in a case where the noise level changes depending on the movement when the robot 600 moves. Specifically, the amount of attenuation A can be obtained by acquiring the noise level at each point when the robot 600 moves from the point P1 to the point P2 in FIG. 3. Further, since the moving distance $(r-r_0)$ can be obtained by the movement of the robot 600, the distance $r_0$ from the noise source can be obtained from Equation (1).

By acquiring the distance between the area designated as the target region and the robot 600 when the distance $r_0$ is obtained, the noise level in the target region can be estimated by the method using the above-mentioned Equation (1). At this time, when it is determined that the noise level in the target region is large and exceeds the above-mentioned upper limit value, the robot 600 performs a physical movement such as "close the door", "close the window", "the robot 600 stands between the noise source and the target region", and the like, so that the noise level to the target region can be suppressed.

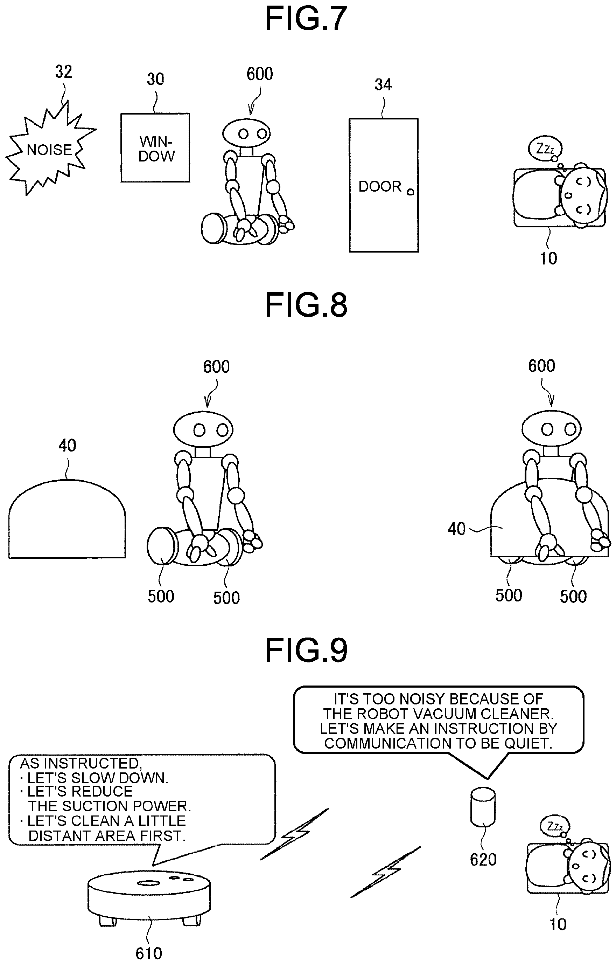

FIG. 7 is a schematic diagram illustrating a case where there is a noise source 32 outdoors outside a window 30, the robot 600 and the baby 10 are present indoors, and there is a door 34 between the robot 600 and the baby 10. When it is determined that there is a noise in the surroundings as above, in a case where the purpose of the robot 600 is to "open the window 30", and there is the noise source 32 outside the window, it is expected that the level of the noise transmitted from the surroundings to the target region will increase by opening the window 30. At this time, when there is the door 34 (or window, etc.) between the area designated as a target region, the noise transfer function from the source 32 to the target region can be reduced by closing it in advance. In other words, the robot 600 operates in advance so as to suppress noise more than necessary not only when the noise is already large, but also when the noise to the target region is expected to increase due to the movement of itself or the movement of another entity, etc. As a result, it is possible to prevent the noise to the target region from exceeding the upper limit value.

4.2. When the ambient noise is large

When the ambient noise is very large and the noise of the robot itself is smaller than the ambient noise by the predetermined value (10 dB) or more, the noise amplification hardly occurs as is clear from the following Equation (2). Therefore, the robot 600 can operate without worrying about noise. That is, whether the noise should be suppressed by slowly performing its own movement is a factor that depends on the ambient noise level.

For example, when there is a sound of A decibel [dB] and a sound of B decibel [dB], the noise level can be obtained from the following Equation (2).

$$\text{Noise level [dB]} = 10 \times \text{Log}_{10} \left(10^{A/10} \pm 10^{B/10}\right) \ \dots \ (2)$$

According to Equation (2), when the difference between the sound of A decibel [dB] and the sound of B decibel [dB] is 10 [dB] or more, the amount of increase (or decrease) of the noise level obtained from the left side is zero.

Further, from Equation (2), it can be seen that the increase in noise is about 3 dB per location when the same level of the noise is generated from a plurality of sound sources. However, for example, when the entire arms 520 and 530 of the robot 600 are operated, a plurality of actuators operates, so that the noise increases even more, and the noise increasing amount is large enough to be of concern. Therefore, as described in FIG. 5B, it is important to operate the actuators in order without synchronizing them as much as possible in order to reduce the noise level.

4.3. Mute by cover

FIG. 8 is a schematic diagram illustrating an example in which the cover 40 is attached to the robot 600 in order to suppress the degree of transmission of the noise generated from the robot 600 itself. The cover 40 is preferably made of a sound absorbing material, but any material can be used in the same manner as long as a sound shielding effect can be obtained. For example, in order to suppress the sound of the wheel 500, it is good to attach a cover 40 having a length as near as possible to the ground.

4.4. Cooperation between a plurality of devices

FIG. 9 is a schematic diagram illustrating the cooperation of a plurality of devices. FIG. 9 illustrates a case where when a plurality of devices is present, one device 610 (for example, a robot vacuum cleaner) is a noise source, and the other device 620 (for example, a smart speaker) exists near the target region is illustrated. As in the robot 600, the device 620 includes components such as the sound input device 420, the communication device 426, and the control device 400, and can estimate the noise level in the target region. Further, the device 610 includes a communication device that communicates with the device 620.

In this case, the device 620 may send an instruction by radio communication to the device 610 to reduce the noise level. Upon receiving the instruction, the device 610 suppresses noise by lowering the rotation speed of the actuator. Any communication method such as WiFi, infrared rays, Bluetooth (registered trademark), ZigBee, 5G, etc. may be used. In this way, even when the noise source (robot vacuum cleaner 610) does not have the function of estimating the noise in the target region, the noise can be reduced as long as it has the function of receiving the communication function and the remote control operation.

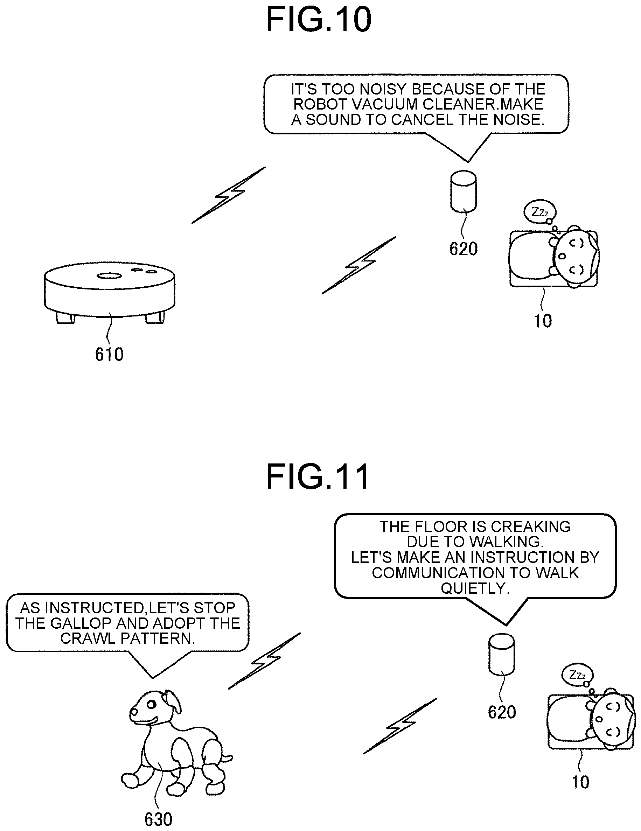

FIG. 10 is a schematic diagram which illustrates the example of canceling a noise in a case where it is not possible to communicate, or in a case where task priority of the device 620 is set high, and it is difficult to reduce the noise when a plurality of devices is present as in FIG. 9. In the example illustrated in FIG. 10, the device 620 having the same configuration as the robot 600 has a digital noise canceling function and reduces the noise to the target region. Specifically, the sound output control unit 442 controls the sound output device 422 based on the noise in the target region estimated by the noise estimation unit 434, so that digital noise canceling is performed by generating a sound from the sound output device 422.

4.5. Example of walking robot

FIG. 11 is a schematic diagram illustrating an example of a walking robot 630. The robot 630 includes a communication device that communicates with the device 620. In the case of the walking robot 630, when the noise generated by walking, particularly the noise generated by touchdown, is large, the walking method can be devised so that the noise is reduced. For example, quadrupedal walking includes walking such as gallop, crawl, and trot, and it is possible to move quietly by crawl although the speed is relatively slow. In the example illustrated in FIG. 11, the device 620 issues an instruction to the robot 630 to change the walking method of the robot 630. Specifically, the communication command unit 444 transmits a command that changes the walking method to the communication device 426 based on the noise in the target region estimated by the noise estimation unit 434. The robot 630 changes the walking method based on the received command.

### 4.6. Route selection according to road surface condition

When the robot 600 moves, the noise is generated at the contact portion when the robot 600 moves on a hard floor, so that the noise generated may be smaller when the robot 600 moves on the cushion. The information about the noise acquired by the sound input device 420 is stored together with the position information obtained from the position information acquisition unit 440 to selectively select an orbit where the noise is less likely to generate, so that the desired operation can be achieved while suppressing the generation of the noise. In addition, the noise can be reduced by walking on a carpet or moving away from an object (such as a toy) that makes a sound when it collapses. By storing the information about such a route in the ROM 404 or the external storage device 406 in advance, the route planning unit 446 formulates the route plan. Then, the actuator control unit 436 controls the actuator 550 based on the route plan, so that the movement in the route with reduced noise is realized.

### 4.7. Whitening noise

When noise that includes many frequency bands that humans dislike is reached, it is possible to reduce unpleasant sounds for humans by actively increasing the noise to make it white noise. Because humans dislike sounds of about 2 kHz to 4 kHz, represented by a sound of scratching a blackboard, and sounds of about 15 kHz, which are used by convenience stores for removal of young people, when the noise contains a large amount of these frequencies, discomfort can be reduced by generating different noises. Specifically, in the example illustrated in FIG. 10, when the device 610 is a source of the unpleasant noise, the smart speaker 620 produces a sound that is different from the unpleasant sound, so that the noise to the target region can be reduced. In this case, the discomfort can be reduced by generating the sound of 2 kHz or less from the smart speaker 620 so that the noise level is about the same as that of the device 610. Specifically, the sound output control unit 442 controls the sound output device 422 based on the frequency band in the target region estimated by the noise estimation unit 434 to generate the sound of 2 kHz or less from the sound output device 422.

### 4.8. Mute by drive system

When the driving noise of the actuator of the robot 600 is a problem, the vibration noise or the like may be generated when the postures of the arms 520 and 530 are position controlled by the servomotor. On the other hand, the noise can be suppressed by fixing the angles of the joints of the arms 520 and 530 with a mechanical brake. Similarly, the noise can be suppressed by using a brake when fixing the position of the wheel 500.
When the robot 600 moves with the wheels 500, only inertia can keep the robot moving forward when releasing the clutch in the case of linear motion, so that it is possible to prevent the driving noise of the actuator 550 from generating to reduce the noise.

### 5. Modification

The robot 600 may be a robot having a moving function, a manipulator, or any form. The present disclosure can be applied to a wide variety of robots including cleaning robots, drones, mobile manipulators, industrial manipulators, personal mobilities, communication robots, etc.
The settings for the robot 600 are set in advance at the time of shipment, and the setting may be changed by inputting operation information from the user interface (UI) 424 according to the individual's wishes. Specifically, it is possible to perform setting to reduce the noise to an individual or an individual animal, or the noise in the vicinity of a specific room. The setting information can be stored in the ROM 404. The information to be set includes the maximum noise level in the target region, information on the target region in which the noise is required to be taken care of, operations which should not be performed, frequency information which should be taken care of, and the like.
As a method of instructing the setting, the information may be input by a tablet, a smartphone, a PC, etc. to which a dedicated application is mounted, or the information may be input by a dedicated device, a voice or a gesture, or a brain wave instruction. That is, a generally existing instruction method of the robot can be used as the setting method.

Furthermore, when the target person makes an utterance indicating that the target person is unpleasant to the noise, the sound input device 420 can recognize this, and the upper limit value of the target noise level can be set even lower. In this way, the settings for the robot 600 can be learned by watching human movements, and the robot 600 may learn, for example, based on how large noise to be reduced a person is actually paying attention to, in which region a person is concerned about the noise, and under what circumstances a person is trying to suppress the noise.

As a restraint condition for the operation of the robot 600, the restraint condition is given depending on the situation of the robot, such as the condition in which the robot cannot drop a baggage held by the robot (when gripping it with both hands, both hands cannot be moved independently), and the condition in which the robot cannot tilt a baggage held by the robot (such as a cup containing liquid). The operation of suppressing the noise is performed while maintaining these restraint conditions.

Specific examples of the target region include the following.

- a sleeping person, a baby, an animal, a person in conference or in conversation (including a video conference, a conference call, etc.), a robot, a person who is engaged in video recording/sound recording, a person or a robot who is performing an experiment of vibration measurement, etc., a person who is watching/listening to video/audio, a person who is playing an instrument or singing a song, a person who is working, and a person who is studying
- a place: a space where a ceremonial occasion is held, a historical, cultural, or religious space with some ceremonial value
- Others: may include a person, an animal, and a place designated by the person who has the authority to direct the robot, and may be conditioned by factors such as time zone, day of the week, season, year, month, and weather.

For example, the conditions in which "On a rainy day, it's hard to hear the noise in the next house, so it is allowed to perform cleaning until a later time.", and "13:00 to 15:00 is the time when the child in the next house takes a nap, so it must be quiet." can be set.

Settings related to the target region may be set by the user from the user interface (UI) 424, or may be set by the robot 600 based on the position information obtained from the position information acquisition unit 440. For example, by linking the position information with the ceremony hall where the ceremonial occasion is held, it is possible to set the target region to the ceremony hall based on the position information.

Various methods can be applied to measure the actual distance to the target region or the noise source. There are many ways of methods using the image input device 418 (visible light camera or infrared camera), a toF sensor, an ultrasonic sensor, a laser sensor, a range sensor, a GPS, an encoder mounted on wheels, etc.

The noise measurement may be linked with devices such as a PC with a microphone or a smart speaker that is usually installed in the room, a smartphone, a tablet, and a robot. In addition, the audio data acquired by connecting it with a network such as WiFi or BlueTooth (registered trademark) can be used for learning. Alternatively, it is possible to use the noise measurement in real time to actually reduce the noise at this position.

As a method of making it difficult for the noise of the robot to reach the target region, the robot can make its own body a wall by operating the part where the sound is generated in a direction opposite to the target region. When the source of the noise is an arm, only the arm may be turned to the back, or the whole body may be turned to the back.

The sound to be suppressed differs depending on the type of animal in the target region. For animals bought as pets, frequencies that they dislike are different. When these frequencies reach the target region, it is possible to cope with the noise by making it white noise as described above. As an example, the frequency band that dogs dislike is about 18 KHz, the frequency band that cats dislike is 19 KHz, and the frequency band that mice dislike is about 20 KHz.

Further, depending on the type of sound, it is not necessary to try to suppress the noise. For example, the noise includes an emergency alert associated with a fire and an earthquake, a sound from an emergency vehicle, and a voice, of a child, that reach a parent when the sleeping child begins to cry. In addition, it is not necessary to suppress sounds that are not audible to creatures and humans in the target region. Depending on the condition of the target region, for example, a person wearing a headphone, it is not necessary to suppress the sound.

As described above, according to the present embodiment, the noise in the target region is estimated and the robot 600 is controlled based on the estimated noise, so that it is possible not to give a noise to a subject to which it is not desired to give the noise.

The preferred embodiments of the present disclosure have been described in detail with reference to the accompanying drawings, but the technical scope of the present disclosure is not limited to such examples.

Furthermore, the effects described in the present specification are merely illustrative or exemplified effects, and are not limitative. That is, the technique according to the present disclosure can accomplish other effects apparent to those skilled in the art from the description of the present specification, in addition to or instead of the effects described above.

Reference Signs List

400    CONTROL DEVICE

432    TARGET REGION SETTING UNIT
434    NOISE ESTIMATION UNIT
436    ACTUATOR CONTROL UNIT
442    SOUND OUTPUT CONTROL UNIT
444    COMMUNICATION COMMAND UNIT

**Claims**

1.  A mobile unit control device (400) comprising:

    a noise estimation unit (434) configured to estimate, based on a position of a sound source and a sound volume generated by the sound source, a noise in a target region in which the noise is to be suppressed; and
    a control unit configured to control, based on the estimated noise, an operation of a mobile unit to reduce the noise in the target region;
    wherein when the estimated noise in the target region exceeds an upper limit value, the control unit is configured to control the operation so that the sound of the sound source is generated at a point which is away from the target region and where the estimated noise in the target region is equal to or lower than the upper limit value.

2.  The mobile unit control device according to claim 1, further comprising a handling region setting unit that sets the target region in which a noise is suppressed.

3.  The mobile unit control device according to claim 1, further comprising:

    an actuator (552, 554, 550) that is the sound source, wherein
    the control unit controls an operation of the actuator based on the estimated noise.

4.  The mobile unit control device according to claim 1, wherein the control unit sequentially controls a plurality of the operations at a point away from the target region.

5.  The mobile unit control device according to claim 1, further comprising:

    a movement mechanism for movement, wherein
    the control unit controls, based on a noise in the target region, an operation of the movement mechanism so that the mobile unit control device moves away from the target region.

6.  The mobile unit control device according to claim 1, wherein the control unit controls, based on a noise in the target region, an operation of disposing a shield that blocks a sound between the target region and the sound source.

7.  The mobile unit control device according to claim 1, further comprising a transmission command unit that transmits, to the sound source, a command that reduces a noise based on the noise in the target region.

8.  The mobile unit control device according to claim 1, further comprising a sound output control unit (442) that performs control for outputting a sound that cancels a noise based on the noise in the target region.

9.  The mobile unit control device according to claim 1, further comprising a transmission command unit that transmits a command that changes a walking method of a walking robot which is the sound source based on a noise in the target region.

10. A method of controlling a mobile unit, the method comprising:

    estimating, based on a position of a sound source and a sound volume generated by the sound source, a noise in a target region in which the noise is to be suppressed; and
controlling, based on the estimated noise, an operation of a mobile unit to reduce the noise in the target region;
wherein when the estimated noise in the target region exceeds an upper limit value, the operation is controlled so the sound of the sound source is generated at a point which is away from the target region and where the estimated noise in the target region is equal to or lower than the upper limit value.

11. A program product causing a computer to function as

a unit that estimates, based on a position of a sound source and a sound volume generated by the sound source, a noise in a target region in which the noise is to be suppressed; and
a unit that controls, based on the estimated noise, an operation of a mobile unit to reduce the noise in the target region;
wherein when the estimated noise in the target region exceeds an upper limit value, the operation is controlled so the sound of the sound source is generated at a point which is away from the target region and where the estimated noise in the target region is equal to or lower than the upper limit value.

**Patentansprüche**

1. Steuerungsvorrichtung (400) für mobile Einheit, umfassend:

eine Rauchschätzeinheit (434), die zum Schätzen eines Rauschens in einer Zielregion, in welcher das Rauschen unterdrückt werden soll, basierend auf einer Position einer Schallquelle und einer durch die Schallquelle erzeugten Laustärke konfiguriert ist; und
eine Steuereinheit, die zum Steuern einer Operation der mobilen Einheit zum Reduzieren des Rauschens in der Zielregion basierend auf dem geschätzten Rauschen konfiguriert ist;
wobei die Steuereinheit so konfiguriert ist, dass sie, wenn das geschätzte Rauschen in der Zielregion einen oberen Grenzwert überschreitet, die Operation so steuert, dass der Schall der Schallquelle an einem Punkt erzeugt wird, der von der Zielregion entfernt ist, und wobei das geschätzte Rauschen in der Zielregion gleich wie oder niedriger als der obere Grenzwert ist.

2. Steuerungsvorrichtung für mobile Einheit nach Anspruch 1, ferner umfassend eine Behandlungsregionsfestlegungseinheit, welche die Zielregion festlegt, in welcher ein Rauschen unterdrückt wird.

3. Steuerungsvorrichtung für mobile Einheit nach Anspruch 1, ferner umfassend:

einen Aktor (552, 554, 550), bei dem es sich um die Schallquelle handelt, wobei
die Steuereinheit eine Operation des Aktors basierend auf dem geschätzten Rauschen steuert.

4. Steuerungsvorrichtung für mobile Einheit nach Anspruch 1, wobei die Steuereinheit eine Mehrzahl der Operationen an einem von der Zielregion entfernten Punkt nacheinander steuert.

5. Steuervorrichtung für mobile Einheit nach Anspruch 1, ferner umfassend:

einen Bewegungsmechanismus für Bewegung, wobei
die Steuereinheit eine Operation des Bewegungsmechanismus basierend auf einem Rauschen in der Zielregion so steuert, dass die Steuerungsvorrichtung für die mobile Einheit sich von der Zielregion wegbewegt.

6. Steuerungsvorrichtung für mobile Einheit nach Anspruch 1, wobei die Steuereinheit eine Operation des Anordnens einer Abschirmung, die einen Schall zwischen der Zielregion und der Schallquelle blockiert, basierend auf einem Rauschen in der Zielregion steuert.

7. Steuerungsvorrichtung für mobile Einheit nach Anspruch 1, ferner umfassend eine Befehlsübertragungseinheit, die einen Befehl, der ein Rauschen reduziert, basierend auf dem Rauschen in der Zielregion an die Schallquelle überträgt.

8. Steuerungsvorrichtung für mobile Einheit nach Anspruch 1, ferner umfassend eine Schallausgabesteuereinheit (442), die Steuerung zum Ausgeben eines Schalls, der ein Rauschen aufhebt, basierend auf dem Rauschen in der Zielregion durchführt.

9. Steuerungsvorrichtung für mobile Einheit nach Anspruch 1, ferner umfassend eine Befehlsübertragungseinheit, die einen Befehl, der die Gehweise eines Laufroboters ändert, bei dem es sich um die Schallquelle handelt, basierend auf einem Rauschen in der Zielregion überträgt.

10. Verfahren zur Steuerung einer mobilen Einheit, wobei das Verfahren umfasst:

Schätzen eines Rauschens in einer Zielregion, in welcher das Rauschen unterdrückt werden soll, basierend auf einer Position einer Schallquelle und einer durch die Schallquelle erzeugten Laustärke; und
Steuern einer Operation der mobilen Einheit zum Reduzieren des Rauschens in der Zielregion basierend auf dem geschätzten Rauschen;
wobei, wenn das geschätzte Rauschen in der Zielregion einen oberen Grenzwert überschreitet, die Operation so gesteuert wird, dass der Schall der Schallquelle an einem Punkt erzeugt wird, der von der Zielregion entfernt ist, und wobei das geschätzte Rauschen in der Zielregion gleich wie oder niedriger als der obere Grenzwert ist.

11. Programmprodukt zum Veranlassen, dass ein Computer fungiert als:

eine Einheit, die ein Rauschen in einer Zielregion, in welcher das Rauschen unterdrückt werden soll, basierend auf einer Position einer Schallquelle und einer durch die Schallquelle erzeugten Laustärke schätzt; und
eine Einheit, die eine Operation der mobilen Einheit zum Reduzieren des Rauschens in der Zielregion basierend auf dem geschätzten Rauschen steuert;
wobei, wenn das geschätzte Rauschen in der Zielregion einen oberen Grenzwert überschreitet, die Operation so gesteuert wird, dass der Schall der Schallquelle an einem Punkt erzeugt wird, der von der Zielregion entfernt ist, und wobei das geschätzte Rauschen in der Zielregion gleich wie oder niedriger als der obere Grenzwert ist.

## Revendications

1. Dispositif de commande d'unité mobile (400) comprenant :

une unité d'estimation de bruit (434) configurée pour estimer, sur la base d'une position d'une source sonore et d'un volume sonore généré par la source sonore, un bruit dans une région cible dans laquelle le bruit doit être supprimé ; et
une unité de commande configurée pour commander, sur la base du bruit estimé, le fonctionnement d'une unité mobile pour réduire le bruit dans la région cible ;
où, lorsque le bruit estimé dans la région cible dépasse une valeur limite supérieure, l'unité de commande est configurée pour commander le fonctionnement de sorte que le son de la source sonore soit généré à un point qui est éloigné de la région cible et où le bruit estimé dans la région cible est égal ou inférieur à la valeur limite supérieure.

2. Dispositif de commande d'unité mobile selon la revendication 1, comprenant en outre une unité de définition de région de traitement qui définit la région cible dans laquelle un bruit est supprimé.

3. Dispositif de commande d'unité mobile selon la revendication 1, comprenant en outre :
un actionneur (552, 554, 550) qui est la source sonore, dans lequel :
l'unité de commande commande le fonctionnement de l'actionneur sur la base du bruit estimé.

4. Dispositif de commande d'unité mobile selon la revendication 1, dans lequel l'unité de commande commande séquentiellement une pluralité des opérations à un point éloigné de la région cible.

5. Dispositif de commande d'unité mobile selon la revendication 1, comprenant en outre :
un mécanisme de déplacement pour le déplacement, où :
l'unité de commande commande, sur la base d'un bruit dans la région cible, une opération du mécanisme de déplacement de sorte que le dispositif de commande d'unité mobile s'éloigne de la région cible.

6. Dispositif de commande d'unité mobile selon la revendication 1, dans lequel l'unité de commande commande, sur la base d'un bruit dans la région cible, une opération comprenant de disposer un écran qui bloque un son entre la région cible et la source sonore.

7.  Dispositif de commande d'unité mobile selon la revendication 1, comprenant en outre une unité de commande de transmission qui transmet, à la source sonore, une commande qui réduit un bruit sur la base du bruit dans la région cible.

8.  Dispositif de commande d'unité mobile selon la revendication 1, comprenant en outre une unité de commande de délivrance de son (442) qui exécute une commande pour délivrer en sortie un son qui annule un bruit sur la base du bruit dans la région cible.

9.  Dispositif de commande d'unité mobile selon la revendication 1, comprenant en outre une unité de commande de transmission qui transmet une commande qui change un procédé de marche d'un robot de marche qui est la source sonore sur la base d'un bruit dans la région cible.

10. Procédé de commande d'une unité mobile, le procédé comprenant les étapes suivantes :

    estimer, sur la base d'une position d'une source sonore et d'un volume sonore généré par la source sonore, un bruit dans une région cible dans laquelle le bruit doit être supprimé ; et
    commander, sur la base du bruit estimé, le fonctionnement d'une unité mobile pour réduire le bruit dans la région cible ;
    où, lorsque le bruit estimé dans la région cible dépasse une valeur limite supérieure, le fonctionnement est commandé de sorte que le son de la source sonore soit généré à un point qui est éloigné de la région cible et où le bruit estimé dans la région cible est égal ou inférieur à la valeur limite supérieure.

11. Produit programme permettant à un ordinateur de fonctionner comme une unité qui estime, sur la base de la position d'une source sonore et d'un volume sonore généré par la source sonore, un bruit dans une région cible dans laquelle le bruit doit être supprimé ; et une unité qui commande, sur la base du bruit estimé, le fonctionnement d'une unité mobile pour réduire le bruit dans la région cible ;
    où, lorsque le bruit estimé dans la région cible dépasse une valeur limite supérieure, le fonctionnement est commandé de sorte que le son de la source sonore soit généré à un point qui est éloigné de la région cible et où le bruit estimé dans la région cible est égal ou inférieur à la valeur limite supérieure.

# FIG.1

# FIG.2

418 IMAGE INPUT DEVICE

424 UI

400

438 OPERATION INPUT UNIT

440 GPS

432 TARGET REGION SETTING UNIT

420 SOUND INPUT DEVICE

434 NOISE ESTIMATION UNIT

442 SOUND OUTPUT CONTROL UNIT

422 SOUND OUTPUT DEVICE

435 NOISE MODEL

436 ACTUATOR CONTROL UNIT

444 COMMUNICA-TION COMMAND UNIT

426 COMMUNICA-TION DEVICE

446 ROUTE PLANNING UNIT

ACTUATOR ~552, 554, 550

EP 3 862 838 B1

# FIG.3

50          P1                                    P2

SOUND          $r_0$     AMOUNT OF                    r
SOURCE                ATTENUATION A

# FIG.4

Zzz

600

20

10

ALTHOUGH THE BABY IS SLEEPING,
IT IS REQUIRED TO TAKE THE OBJECT NEARBY.
TO AVOID WAKING THE BABY UP,WHILE THE
DISTANCE IS FAR,LET'S PERFORM A NOISY
OPERATION.

# FIG.5A

# FIG.5B

# FIG.6A

# FIG.6B

18

# FIG.7

32 NOISE
30 WINDOW
600
34 DOOR
Zzz
10

# FIG.8

600
40
500 500

600
40
500 500

# FIG.9

IT'S TOO NOISY BECAUSE OF THE ROBOT VACUUM CLEANER. LET'S MAKE AN INSTRUCTION BY COMMUNICATION TO BE QUIET.

AS INSTRUCTED,
· LET'S SLOW DOWN.
· LET'S REDUCE THE SUCTION POWER.
· LET'S CLEAN A LITTLE DISTANT AREA FIRST.

620

Zzz

10

610

# FIG.10

IT'S TOO NOISY BECAUSE OF THE
ROBOT VACUUM CLEANER.MAKE
A SOUND TO CANCEL THE NOISE.

620

10

610

# FIG.11

THE FLOOR IS CREAKING
DUE TO WALKING.
LET'S MAKE AN INSTRUCTION BY
COMMUNICATION TO WALK
QUIETLY.

AS INSTRUCTED,LET'S STOP
THE GALLOP AND ADOPT THE
CRAWL PATTERN.

620

10

630

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006095635 A
- CN 205121334 U
- EP 1736330 A2
- US 2018033421 A1